Europäisches Patentamt

(19) European Patent Office

Office européen des brevets

(11) Numéro de publication : **0 337 884 B1**

(12) **FASCICULE DE BREVET EUROPEEN**

(45) Date de publication du fascicule du brevet :
04.12.91 Bulletin 91/49

(51) Int. Cl.⁵ : **F16B 5/12**

(21) Numéro de dépôt : 89401013.1

(22) Date de dépôt : 12.04.89

(54) Dispositif de fixation.

(30) Priorité : 12.04.88 FR 8804811

(43) Date de publication de la demande :
18.10.89 Bulletin 89/42

(45) Mention de la délivrance du brevet :
04.12.91 Bulletin 91/49

(84) Etats contractants désignés :
DE ES GB IT

(56) Documents cités :
EP-A- 0 253 736
FR-A- 2 564 909
GB-A- 2 121 098
US-A- 4 011 635

(73) Titulaire : REGIE NATIONALE DES USINES
RENAULT
Boîte postale 103 8-10 avenue Emile Zola
F-92109 Boulogne-Billancourt (FR)

(72) Inventeur : Lladouze, Alain
18, rue Gabriel Péri
F-78390 Fontenay-le-Fleury (FR)
Inventeur : Martet, Rémy
5, rue de Navarre
F-78490 Montfort l'Amaury (FR)
Inventeur : Perot, Patrick
10, rue André Méssager
F-92500 Ruell-Malmaison (FR)

(74) Mandataire : Ernst-Schonberg, Michel et al
REGIE NATIONALE DES USINES RENAULT (S.
0267) 8 & 10, avenue Emile Zola
F-92109 Boulogne Billancourt Cédex (FR)

## Description

La présente invention se rapporte à un dispositif de fixation d'un élément du type enjoliveur sur un élément support et notamment d'un enjoliveur de carrosserie d'un véhicule automobile.

Lorsque l'on doit monter un enjoliveur destiné à masquer la gouttière de raccordement de deux éléments de carrosserie, on dispose généralement de systèmes de fixation qui ne garantissent pas le positionnement correct de l'élément de décoration.

On connaît notamment par la publication US.A 4011635, des dispositifs de fixation d'un élément sur un support qui comportent au moins deux agrafes disposées à l'intérieur d'une rainure.

Le but de la présente invention est de proposer un dispositif de fixation qui permette de monter sans difficulté l'élément à fixer dans la gouttière et ceci toujours dans la même position par rapport aux bords de la rainure.

Selon l'état de la technique, ces agrafes s'amarrent chacune sur un rivet soudé sur le fond de la rainure par l'intermédiaire d'une découpe comportant des moyens de guidage transversaux de manière à venir bloquer ladite agrafe contre l'un des bords de la rainure et à maintenir en place ladite agrafe par l'action de sa cambrure sous la tête du rivet, lesdites agrafes étant munies de moyens d'accrochage de l'élément à fixer.

L'agrafe est constituée d'un corps de forme rectangulaire et de même épaisseur comportant, selon l'invention une découpe ayant un trou oblong perpendiculaire à l'axe de l'agrafe, une glissière axiale située en dessous de l'axe de l'agrafe et une glissière inclinée prolongeant la glissière axiale ; la partie supérieure du trou oblong étant raccordée à la glissière axiale par une partie inclinée, le trou oblong ayant une largeur qui permette l'introduction de la tête du rivet tandis que la glissière axiale et la glissière inclinée ont une largeur qui permette le passage du corps du rivet; l'axe de la glissière inclinée coupant l'axe de l'agrafe au milieu d'une zone surélevée raccordée par deux rampes, l'une de ses rampes partant du côté droit du trou oblong et venant jusqu'à l'introduction du corps du rivet dans la glissière axiale ; selon un mode de réalisation de l'invention ladite agrafe du côté de la glissière axiale, c'est-à-dire à chaque extrémité du bord inférieur, une languette de butée qui permet de venir bloquer l'agrafe contre le bord correspondant de la rainure par l'action des moyens de guidage transversaux constitués par la glissière inclinée.

De plus, le corps de l'agrafe est muni de chaque côté d'un prolongement qui se relève par un plan d'appui, chacun des bords dudit prolongement étant équipé d'une languette d'accrochage qui fait face à la languette d'accrochage de l'autre bord de manière à constituer les moyens d'accrochage de l'élément à fixer qui vient s'appliquer sur les plans d'appui.

La présente invention présente ainsi l'avantage d'offrir un dispositif de fixation en aveugle qui assure toujours la même mise en place par rapport aux côtés de la gouttière ; et un bon parallélisme de l'enjoliveur par rapport à ces côtés d'où une garantie d'aspect.

D'autres caractéristiques et avantages de la présente invention ressortiront de la description qui suit le mode de réalisation donné à titre d'exemple en référence aux dessins annexés sur lesquels :

— la figure 1 est une vue en perspective avant montage de l'agrafe selon l'invention de l'élément à fixer du type enjoliveur et de l'élément support;

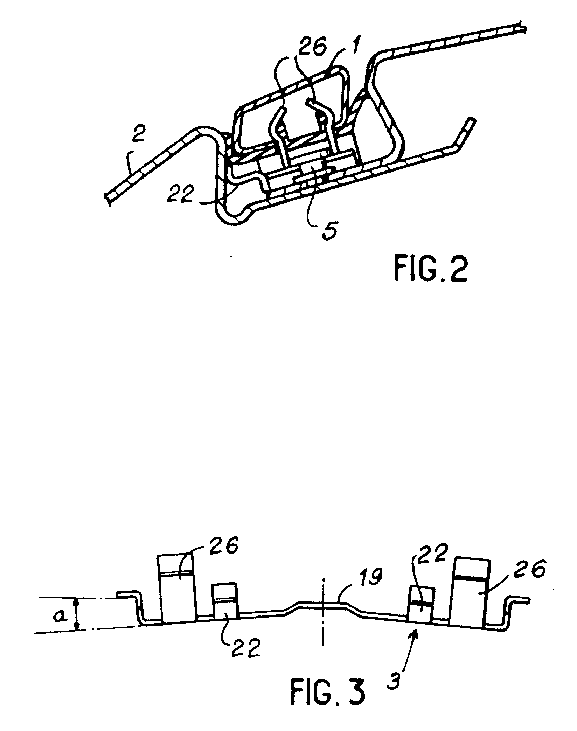

— la figure 2 est une vue en coupe de l'ensemble après montage ;

— la figure 3 est une vue en élévation de l'agrafe de la figure 1 ;

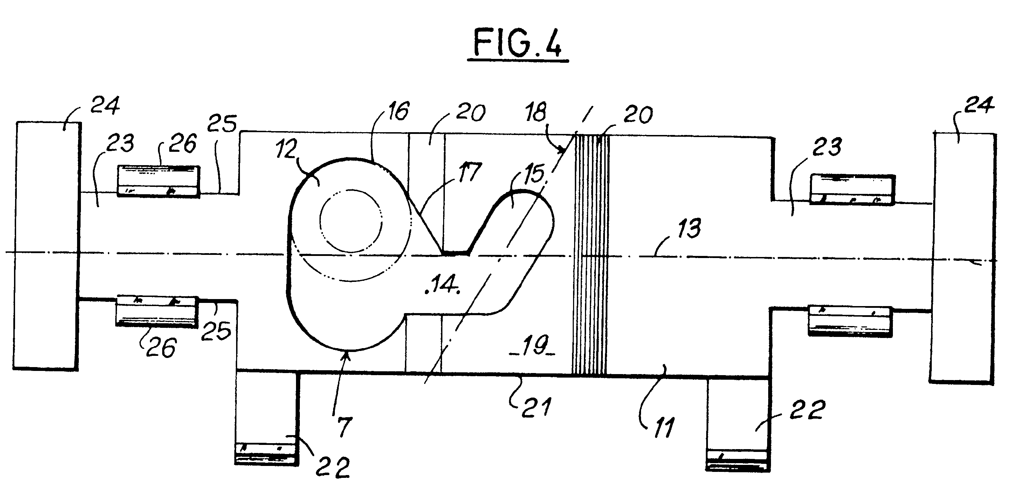

— la figure 4 est une vue en plan de l'agrafe de la figure 1.

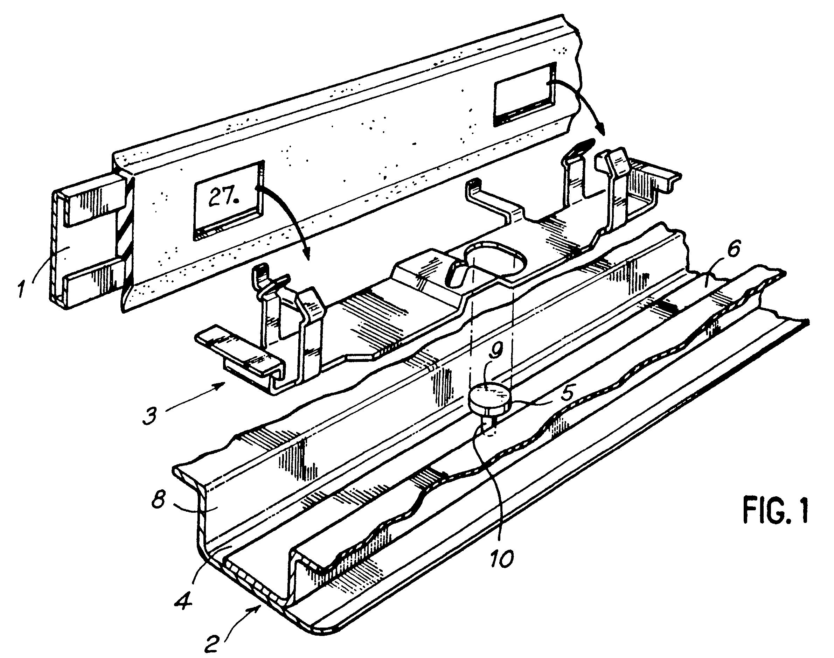

Le dispositif de fixation d'un élément à fixer 1 sur un élément support 2 selon l'invention comporte au moins deux agrafes 3 qui sont disposées à l'intérieur d'une rainure 4 de l'élément support 2. L'élément à fixer est du type enjoliveur de carrosserie automobile. L'ensemble du dispositif est représenté sur la figure 1 avec les différents éléments dessinés avant montage. De plus, l'élément à fixer 1 est muni d'une garniture d'étanchéité en élastomère.

Les agrafes 3 s'amarrent chacune sur un rivet soudé 5 sur le fond 6 de la rainure 4. Chacun des rivets soudés 5 comporte un corps 10 cylindrique surmonté d'une tête 9 également cylindrique ayant un diamètre nettement plus grand que ledit corps 10. Chacune des agrafes 3 est munie d'une découpe référencée 7 dans son ensemble qui comporte des moyens de guidage transversaux de manière à venir bloquer l'agrafe 3 contre l'un des bords 8 de la rainure 4. Chaque agrafe 3 est conformée de manière à avoir une cambrure d'angle a afin de pouvoir maintenir en place ladite agrafe par l'action de sa cambrure sous la tête 9 du rivet 5.

Les agrafes 3 sont munies de moyens d'accrochage de l'élément à fixer 1 qui vient se bloquer sur les agrafes 3 après leur mise en place sur l'élément support 2.

L'agrafe 3 est constituée d'un corps 11 qui a une forme rectangulaire et une même épaisseur. La découpe 7 est aménagée dans ce corps 11 et comporte : un trou oblong 12, une glissière axiale 14 et une glissière inclinée 15 qui constituent les moyens de guidage transversaux. Le trou oblong 12 est perpendiculaire à l'axe 13 de l'agrafe 3, la glissière axiale 14 et située en dessous de l'axe 13 et elle se prolonge par la glissière inclinée 15. Le trou oblong 12 a sa partie supérieure 16 qui est raccordée à la glissière axiale 14 par une partie inclinée 17, l'inclinaison étant de sens opposé à celle de la glissière inclinée 15.

Le trou oblong 12 a une largeur qui autorise le passage de la tête 9 du rivet 5 alors que la glissière axiale 14 et la glissière inclinée 15 ont une largeur qui permet le passage du corps 10 du rivet 5.

L'axe 18 de la glissière inclinée 15 coupe l'axe 13 de l'agrafe 3 au milieu d'une zone surélevée 19 qui est située au centre du corps 11. La zone surélevée 19 est raccordée par deux rampes 20 au reste du corps 11, l'une des rampes 20 partant du côté droit du trou oblong 12 et venant jusqu'à l'introduction du corps 10 du rivet 5 dans la glissière axiale 14.

L'agrafe 3 a, du côté de la glissière axiale 14 et à chaque extrémité du bord inférieur 21, une languette de butée 22. Ces deux languettes de butée 22 permettent à l'agrafe 3 de venir contre le bord 8 correspondant de la rainure 4 par l'action des moyens de guidage transversaux constitués par la glissière inclinée 15.

Le corps 11 de l'agrafe 3 possède, de chaque côté, un prolongement 23 qui se relève par un plan d'appui 24.

Sur chacun des bords 25 des deux prolongements 23 est agencée une languette d'accrochage 26 qui fait face à la languette d'accrochage 26 de l'autre bord 25. Ces languettes d'accrochage 26 constituent ainsi les moyens d'accrochage de l'élément à fixer 1 en s'engageant dans des lumières 27 aménagées dans ledit élément à fixer 1 qui vient s'appliquer sur les plans d'appui 24.

## Revendications

1. Dispositif de fixation d'un élément à fixer (1) du type enjoliveur sur un élément support (2) comportant au moins deux agrafes (3) disposées à l'intérieur d'une rainure (4) de l'élément support (2), constituées d'un corps (11) de forme rectangulaire présentant une découpe (7), lesdites agrafes (3) s'amarrant chacune sur un rivet soudé (5) sur le fond (6) de la rainure (4) par l'intermédiaire de ladite découpe (7) comportant des moyens de guidage transversaux de manière à venir bloquer ladite agrafe (3) contre l'un des bords (8) de la rainure (4), et à maintenir en place ladite agrafe (3) par l'action de sa cambrure sous la tête (9) du rivet (5) lesdites agrafes (3) étant munies de moyens d'accrochage de l'élément à fixer (1), caractérisé en ce que la découpe possède un trou oblong (12) perpendiculaire à l'axe (13) de l'agrafe (3), une glissière axiale (14) située en-dessous de l'axe (13) de l'agrafe (3) et une glissière inclinée (15) prolongeant la glissière axiale (14), la partie supérieure (16) du trou oblong (12) étant raccordée à la glissière axiale (14) par une partie inclinée (17), le trou oblong (12) ayant une largeur qui permette l'introduction de la tête (9) du rivet (5) tandis que la glissière axiale (14) et la glissière inclinée (15) ont une largeur qui permette le passage du corps (10) du rivet (5), l'axe (18) de la glissière inclinée (15) coupant l'axe (13) de l'agrafe (3) au milieu d'une zone surélevée (19) raccordée par deux rampes (20) l'une de ses rampes (20) partant du côté droit du trou oblong (12) et venant jusqu'à l'introduction du corps (10) du rivet (5) dans la glissière axiale (14).

2. Dispositif de fixation selon la revendication 1 caractérisé en ce que ladite agrafe (3) a, du côté de la glissière axiale (14), c'est-à-dire à chaque extrémité du bord inférieur (21) une languette de butée (22) qui permet de venir bloquer l'agrafe (3) contre le bord (8) correspondant de la rainure (4) par l'action des moyens de guidage transversaux constitués par la glissière inclinée (15).

3. Dispositif de fixation selon la revendication 2 caractérisé en ce que le corps (11) de l'agrafe (3) est muni de chaque côté d'un prolongement (23) qui se relève par un plan d'appui (24), chacun des bords (25) dudit prolongement (23) étant équipé d'une languette d'accrochage (26) qui fait face à la languette d'accrochage (26) de l'autre bord (25) de manière à constituer les moyens d'accrochage de l'élément à fixer (1) qui vient s'appliquer sur les plans d'appui (24).

## Claims

1. Fastening device for a member (1) to be fastened of the decorative type on a support member (2) comprising at least two clips (3) disposed within a groove (4) of the support member (2) and formed by a body (11) of rectangular shape having a cut-out portion (7), the clips (3) each being anchored on a rivet (5) welded on the base (6) of the groove (4) via the cut-out portion (7) comprising the transverse guide means so as to lock the clip (3) against one of the edges (8) of the groove (4) and hold the clip (3) in place by the action of its curvature under the head (9) of the rivet (5), the clips (3) being provided with means for hooking the member (1) to be fastened, characterized in that the cut-out portion has an oblong hole (12) perpendicular to the axis (13) of the clip (3), an axial slide (14) disposed below the axis (13) of the clip (3) and an inclined slide (15) extending the axial slide (14), the upper portion (16) of the oblong hole (12) being connected to the axial slide (14) via an inclined portion (17), the oblong hole (12) having a width enabling the introduction of the head (9) of the rivet (5) while the axial slide (14) and the inclined slide (15) have a width enabling the passage of the body (10) of the rivet (5), the axis (18) of the inclined slide (15) intersecting the axis (13) of the clip (3) in the centre of a raised zone (19) connected by two ramps (20), one of these ramps (20) starting from the right-hand side of the oblong hole (12) and extending up to the introduction of the body (10) of the rivet (5) into the axial slide (14).

2. Fastening device as claimed in claim 1, characterized in that the clip (3) has, on the side of the axial slide (14) i.e. at each end of the lower edge (21), an abutment tongue (22) allowing the clip (3) to be locked against the corresponding edge (8) of the groove (4) by the action of the transverse guide means formed by the inclined slide (15).

3. Fastening device as claimed in claim 2, characterized in that the body (11) of the clip (3) is provided on each side with an extension (23) which is raised into a support plane (24), each of the edges (25) of the extension (23) being provided with a hooking tongue (26) which faces the hooking tongue (26) of the other edge (25) so as to form the means for hooking the member (1) to be fastened which is applied to the bearing planes (24).

**Patentansprüche**

1. Vorrichtung zur Befestigung eines zu befestigenden Zierteils an einem Tragteil (2), mit wenigstens zwei Klammern (3), die im Inneren einer Nut (4) des Tragteils (2) angeordnet sind und die aus einem rechtwinkligen Bauteil (11) bestehen, das einen Ausschnitt (7) aufweist, wobei sich die Klammern (3) jeweils auf einer am Boden (6) der Nut (4) angeschweißten Niete (5) durch den Ausschnitt (7) hindurch abstützen, mit einer Querführungsanordnung um dergestalt die Klammer (3) an einem der Ränder (8) der Nut (4) festzustellen und um die Klammer (3) aufgrund ihrer Krümmung unterhalb des Kopfes (9) der Niete (5) festzuhalten, wobei die Klammern (3) mit einer Verankerungsvorrichtung für das zu befestigende Teil (1) versehen sind, dadurch gekennzeichnet, daß der Ausschnitt eine langgestreckte Öffnung (12) senkrecht zur Achse (13) der Klammer (3) aufweist, daß ein axiales Gleitteil (14) unterhalb der Achse (13) der Klammer (3) und ein geneigtes Gleitteil (15) in Verlängerung des axialen Gleitteils (14) vorgesehen sind, daß der obere Abschnitt (16) der langgestreckten Öffnung (12) mit dem axialen Gleitteil (14) über einen geneigten Abschnitt (17) verbunden ist, daß die langgestreckte Öffnung (12) eine Breite aufweist, die das Einführen des Kopfes (9) der Niete (5) ermöglicht, während die axialen und geneigten Gleitteile (14, 15) eine Breite aufweisen, welche den Durchlaß des Teils (10) der Niete (5) ermöglicht, wobei die Achse (18) des geneigten Gleitteils (15) die Achse (13) der Klammer (3) inmitten eines erhabenen mit zwei Schrägen (20) versehenen Abschnitts (19) schneidet, wobei eine der Schrägen (20) von der geraden Seite der langgestreckten Öffnung (12) ausgeht bis zur Einlaßstelle des Teils (10) der Niete (5) in das axiale Gleitteil (14).

2. Vorrichtung nach Anspruch 1, dadurch gekennzeichnet, daß diese Klammer (3) auf der Seite des axialen Gleitteils (14), d.h. an jedem Ende des unteren Randes (21) eine Anschlagzunge (22) aufweist zur Feststellung der Klammer (3) gegen den zugehörigen Rand (8) der Nut (4) aufgrund der Querführung, welche durch das geneigte Gleitteil (15) gebildet wird.

3. Vorrichtung nach Anspruch 2, dadurch gekennzeichnet, daß das Teil (11) der Klammer (3) auf jeder Seite mit einer Verlängerung (23) versehen ist, die aus einer Stützebene (24) herausragt, wobei jeder der Ränder (25) der Verlängerung (23) mit einer Klemmzunge (26) versehen ist, die der Klemmzunge (26) des anderen Randes (25) dergestalt gegenüberliegt, daß sie die Halteanordnung für das zu befestigende Teil (1) bilden, das sich auf den Tragebenen (24) abstützt.

FIG. 1

EP 0 337 884 B1

FIG.2

FIG. 3

# FIG.4